# EUROPEAN PATENT SPECIFICATION

(11) **EP 4 592 535 B1**
(45) Date of publication and mention of the grant of the patent: **02.09.2026**
(21) Application number: 24153965.9
(22) Date of filing: 25.01.2024
(51) Int. Cl.: F16B 1/00

(54) **DEVICE AND METHOD FOR TOLERANCE COMPENSATION**
VORRICHTUNG UND VERFAHREN ZUM TOLERANZAUSGLEICH
DISPOSITIF ET PROCÉDÉ DE COMPENSATION DE TOLÉRANCE

(43) Date of publication of application: 30.07.2025
(73) Proprietor: MINEBEA ACCESSSOLUTIONS ITALIA S.P.A., 10044 Pianezza (IT); AUDI AG, 85057 Ingolstadt (DE)
(72) Inventor: SAVANT, Marco, 10044 Pianezza (IT); GRECO, Davide, 10044 Pianezza (IT); SCHUBERT, André, 85057 Ingolstadt (DE)
(74) Representative: Germain Maureau

(56) References cited:
- US-A1- 2021 039 720

## Description

### TECHNICAL FIELD OF THE INVENTION

This invention relates to the field of tolerance compensation. As an exemplary document from this field US 2021/039720 A1 may be cited.

### BACKGROUND

It is often needed to mount precisely two elements A and B that are fixed on different supports which cannot be precisely positioned, with respect to each other, mainly because of tolerances in the manufacturing processes. This situation may create problems in case of the activation of electronic devices or switches that need be mounted onto one element B, but activated by the other element A, mounted on a different support. This condition of imprecise location of the elements A and B may create collision between the actuating features and the sensor or switch, because the end of stroke will not be positioned properly.

It is known to compensate tolerance on the part fixation, but not on the end of stroke regulation.

### SUMMARY OF THE INVENTION

To that end, the present invention provides a device for positioning of a first workpiece at a predetermined distance from a second workpiece in a mechanical assembly, the device being configured to be mounted on the second workpiece into a through hole of the second workpiece of the mechanical assembly, the device comprising a first part and a second part, the first part being tubular and having a hollow portion formed around an axis of the device, the second part comprising a tubular subpart configured to be inserted, at least partially, inside the hollow portion of the first part, an outer diameter of the tubular subpart of the second part being adjusted to an inner diameter of the hollow portion of the first part so that an outer surface of the tubular subpart of the second part is in frictional contact with an inner surface of the hollow portion of the first part, wherein a first angular position of the second part around the axis of the device is defined, so that a first rotation by a first angle of rotation of the second part around the axis of the device in a first angular direction, from the first angular position drives a rotation, by the first angle of rotation, of the first part around the axis in the first angular direction from the first angular position up to an intermediate angular position, the first rotation of the first part around the axis simultaneously generating a movement of the first part along the axis towards the first workpiece such that an end of the device is in contact with the first workpiece of the mechanical assembly.

According to these provisions, a distance separating the first workpiece and the second workpiece is determined, said distance being a function of a dimension of the device, which is in contact with the first workpiece and the second workpiece, so that the tolerances may be compensated.

The invention participates in enabling to implement a method including making a "zero" point meaning a reference point between the first workpiece and the second workpiece and then setting the proper clearance between the aforementioned workpieces.

According to an embodiment, the invention comprises one or more of the following features, alone or in any combination technically compatible.

The device is configured to be screwably mounted on the second workpiece.

The axis of the device is transversal to a main extension of the first workpiece, and to a main extension of the second workpiece.

A second angular position of the second part around the axis of the device is defined so that the intermediate angular position is between the first angular position and the second angular position, so that during a second rotation of the second part around the axis of the device in the first angular direction, from the intermediate angular position to the second angular position, the first part remains at the intermediate angular position.

According to these provisions, the distance separating the first workpiece and the second workpiece is determined as a function of a dimension of the device, which is in contact with the first workpiece and the second workpiece, and the device being in a second predetermined angular position, so that the tolerances may be compensated.

A third angular position of the second part around the axis of the device is defined inbetween the first angular position and the second angular position, so that a third rotation of the second part, by a third angle of rotation, around the axis of the device in a second angular direction from the second angular position to the third angular position, drives a third rotation, by the third angle of rotation, of the first part around the axis in the second angular direction and simultaneously generates a backward movement of the device along the axis of the device, creating a predetermined distance separating the first workpiece of the mechanical assembly from the end of the device.

According to these provisions, the predetermined distance separating the first workpiece and the end of the device is a function of the third angular rotation and of a pitch of a thread on an outer surface of the first part; the distance separating the first workpiece and the second workpiece can itself be determined as a function of said predetermined distance, and a dimension of the device, so that the tolerances may be compensated, for example so as to reduce or nullify an error coming from tolerance dispersion, in the direction of axis.

A first stop position is located on the second workpiece of the mechanical assembly, the first stop position corresponding to the first angular position of the second part, and wherein a second stop position is located on the second workpiece of the mechanical assembly, the second stop position corresponding to the second angular position of the second part, and wherein a third stop position is located on the second workpiece of the mechanical assembly, the third stop position corresponding to the third angular position of the second part.

The second part comprises a lever subpart integrally fixed with the tubular subpart to actuate the rotation thereof.

The lever subpart is configured to come into contact with the first stop position when the second part is in the first angular position, and wherein the lever subpart is configured to come into contact with the second stop position when the second part is in the second angular position, and wherein the lever subpart is configured to come into contact with the third stop position when the second part is in the third angular position.

According to these provisions, the actuation of the device is made easier.

An outer surface of the tubular subpart of the second part comprises at least one knurled area placed on sectors with a plurality of contacts, configured to slide on an inner surface of the hollow portion of the first part, said inner surface of the hollow portion having a grooved shape comprising an alternation of ramps such that the plurality of contacts slide on the ramps when the second part rotates with respect to the first part in the first angular direction, and walls configured to engage at least one of the plurality of contacts when the second part rotates with respect to the first part in the second angular direction.

According to these dispositions, the outer surface of the tubular subpart of the second part is in frictional contact with the inner surface of the hollow portion of the first part.

The end of the first part comprises at least one protruding element.

The at least one protruding element comprises a first protruding element, and a second protruding element.

The first protruding element is made of an elastic material, such as rubber.

The first protruding element is compressed when the second protruding element is in contact with the first workpiece of the mechanical assembly, the compressed first protruding element being configured to exert a friction torque on the first part, said friction torque being greater than another opposing friction torque resulting from the frictional contact between the outer surface of the tubular subpart of the second part and the inner surface of the hollow portion of the first part, such that the second part rotates with respect to the first part in the first angular direction, while the first part rotation is stopped.

According to another aspect, the invention provides an assembly comprising such device, the second workpiece, wherein the device is mounted on the second workpiece into the through hole of the second workpiece of the assembly.

The assembly for example further comprises the first workpiece.

According to another aspect, the invention provides a vehicle door comprising such assembly, wherein the assembly is a vehicle door opening assembly, the first workpiece is an opening actuation member, located on an outer side of a door panel, such device being mounted on the second workpiece of the door opening assembly.

According to another aspect, the invention provides a vehicle comprising such vehicle door, for example such vehicle doors.

According to another aspect, the invention relates to a method for positioning of a first workpiece at a predetermined distance from a second workpiece in a mechanical assembly, the method using a device mounted on the second workpiece into a hole, for example a through hole, of the second workpiece of the mechanical assembly, the device being for example mobile in rotation around an axis of the device, the device comprising a first part and a second part, the first part being tubular and comprising a hollow portion formed around the axis of the device, the second part comprising a tubular subpart configured to be inserted inside the hollow portion of the first part, an outer diameter of the tubular subpart of the second part being adjusted to an inner diameter of the hollow portion of the first part so that an outer surface of the tubular subpart of the second part is in frictional contact with an inner surface of the hollow portion of the first part, wherein a first angular position of the second part around an or the axis of the device is defined, the method comprising the following step:
- apply a first rotation, by a first angle of rotation, to the second part around the axis of the device in a first angular direction, from the first angular position driving a rotation, by the first angle of rotation, of the first part around the axis in the first angular direction from the first angular position up to an intermediate angular position, the first rotation of the first part around the axis simultaneously generating a movement of the first part along the axis towards the first workpiece such that an end of the first part is in contact with the first workpiece of the mechanical assembly.

According to these provisions, a distance separating the first workpiece and the second workpiece is determined, said distance being a function of a dimension of the device, which is in contact with the first workpiece and the second workpiece, so that the tolerances may be compensated.

According to an embodiment, a second angular position of the second part around the axis of the device is defined so that the intermediate angular position is between the first angular position and the second angular position, and the method further comprises the following step:
- apply a second rotation of the second part around the axis of the device in the first angular direction, from the intermediate angular position to the second angular position, the first part remaining at the intermediate angular position.

According to these provisions, the distance separating the first workpiece and the second workpiece is determined as a function of a dimension of the device, which is in contact with the first workpiece and the second workpiece, and the device being in a second predetermined angular position, so that the tolerances may be compensated.

According to an embodiment, a third angular position of the second part around the axis of the device is defined in-between the first angular position and the second angular position, and the method further comprises the following step:
- apply a third rotation of the second part, by a third angle of rotation, around the axis of the device in a second angular direction from the second angular position to the third angular position, said third rotation driving a third rotation, by the third angle of rotation, of the first part around the axis in the second angular direction and simultaneously generating a backward movement of the device along the axis of the device, creating a predetermined distance separating the first workpiece of the mechanical assembly from the end of the device.

According to these provisions, the predetermined distance separating the first workpiece and the end of the device is proportional to the third angular rotation and to a pitch of a thread on an outer surface of the first part; the distance separating the first workpiece and the second workpiece can itself be determined as a function of said predetermined distance, and a dimension of the device, so that the tolerances may be compensated.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refers to similar elements or to elements having similar functions, and in which:
[Fig. 1] represents a vehicle door opening assembly comprising two workpieces A and B which need to be precisely positioned with respect to one another, so that a sensor or a switch placed on the second workpiece B may be actuated by an actuating feature AF attached to the first workpiece A.
[Fig. 2] represents the assembly of figure 1 in a configuration wherein a protruding elements at the first end of the first part of the device according to an embodiment of the invention, are in contact with the first workpiece A of the mechanical assembly so that an external friction is exerted on the first part of the device.
[Fig. 3] represents the assembly of figures 1 and 2 in a configuration wherein a new distance between a protruding element at the first end of the first part of the device is determined.
[Fig. 4] represents a perspective view of the components of a device for compensation of tolerances, according to an embodiment of the invention.
[Fig. 5] represents an exploded view of the components of a device for compensation of tolerances, according to an embodiment of the invention.

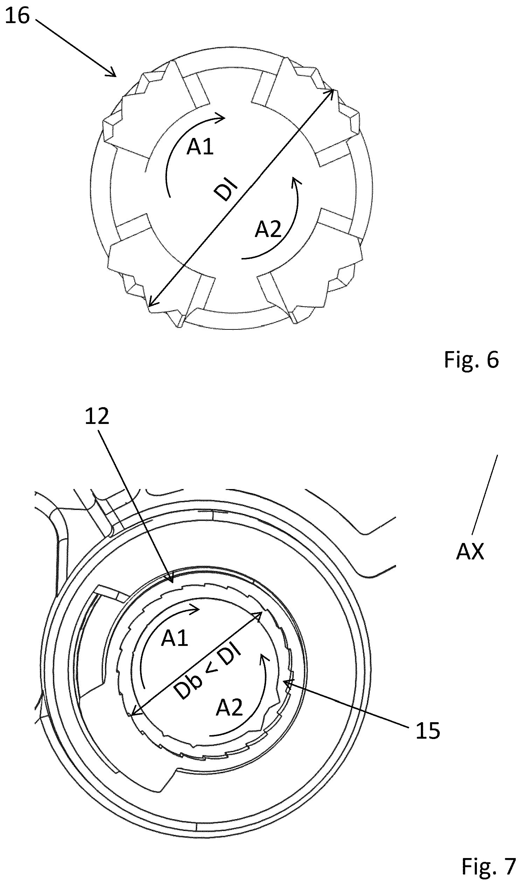

[Fig. 6] represents a section of the tubular subpart of the second part of the device for compensation of tolerances, according to an embodiment of the invention.
[Fig. 7] represents a section of the hollow portion of second part of the device for compensation of tolerances, according to an embodiment of the invention.
[Fig. 8] represents a more detailed section of the hollow portion of second part of the device for compensation of tolerances, according to an embodiment of the invention, representing in particular an outer surface of the tubular subpart of the second part in frictional contact with an inner surface of the hollow portion of the first part.
[Fig. 9] represents the second part of the device, with the lever subpart, at a first stop position.
[Fig. 10] represents a section view, according to section plane AA-AA represented in figure 9, of the mechanical assembly in a configuration wherein the lever subpart of the second part of the device is in the first stop position.
[Fig. 11] represents the second part of the device, with the lever subpart at a third stop position.
[Fig. 12] represents a section view, according to section plane CC-CC represented in figure 11, of the mechanical assembly in a configuration wherein the lever subpart of the second part of the device is in the third stop position.
[Fig. 13] represents a perspective view of the mechanical assembly in different configurations wherein the lever subpart of the second part of the device is in the different stop positions.
[Fig. 14] is a schematic diagram presenting the sequence of the steps of a method according to an embodiment of the invention.

### DETAILED DESCRIPTION OF THE INVENTION ACCORDING TO AN EMBODIMENT

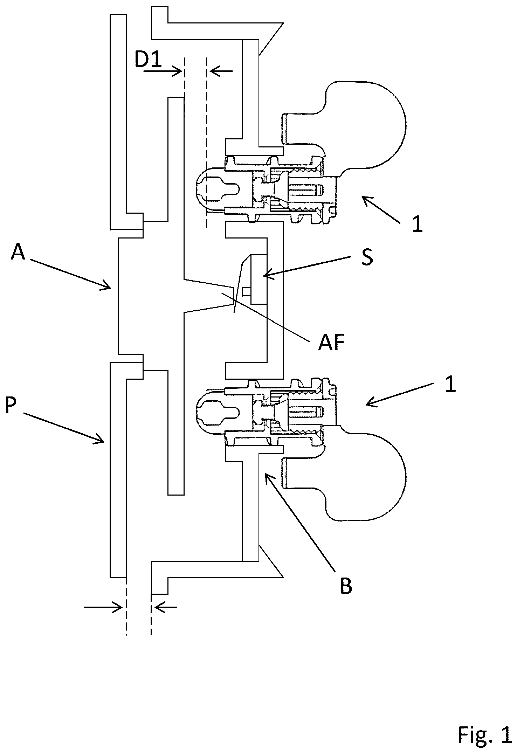

Figure 1 represents a mechanical assembly comprising two workpieces A and B, which need to be precisely positioned with respect to one another, so that a sensor or a switch placed on the second workpiece B may be actuated by an actuating feature AF attached to the first workpiece A. The first workpiece A has a first main extension and the second workpiece B has a second main extension, the first main extension of the first workpiece A, and the second main extension of the second workpiece B are mobile with respect to one another, along a mobility axis, the mobility axis being transversal to the first main extension of the first workpiece A, and to the second main extension of the second workpiece B.

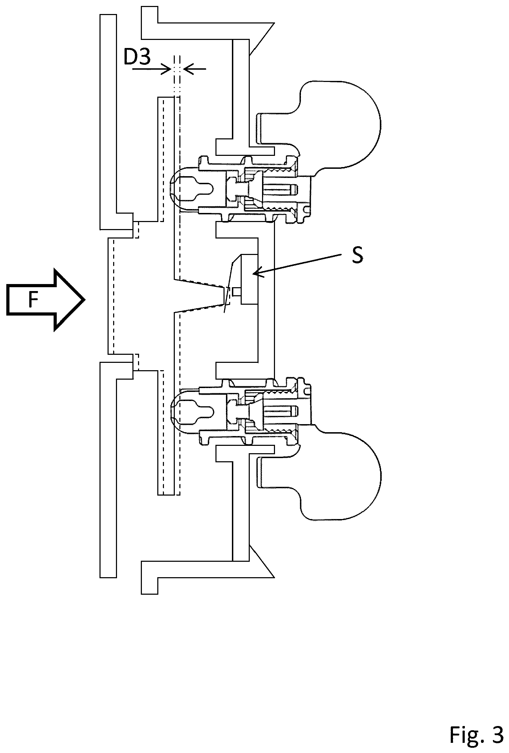

For example, the mechanical assembly may be a vehicle door opening assembly, wherein the first workpiece A may be an opening actuation area, such as a brand logo, located on an outer side of a door panel P, the actuating feature AF being a pin attached to and protruding from an inner side of the opening actuation area, so that a pressure F applied on the opening actuation area leads to a displacement of the attached feature AF, as illustrated on Figure 3, which can be detected by the sensor S, or which actuates the switch S, attached to the second workpiece B of the mechanical assembly. The sensor S may be for example a strain gauge, such as a piezoelectric sensor.

A correct actuation of the sensor or the switch S, by the actuating feature AF, requires that a distance D between the first workpiece A and the second workpiece B of the mechanical assembly be precisely adjusted, as illustrated on figure 3, to compensate manufacturing processes tolerances associated with the manufacturing and the assembly of the different components of the mechanical assembly.

To that effect, a device 1 is provided with the second workpiece B, to adjust a relative distance D between the first workpiece A and the second workpiece B, so that manufacturing processes tolerances may be compensated.

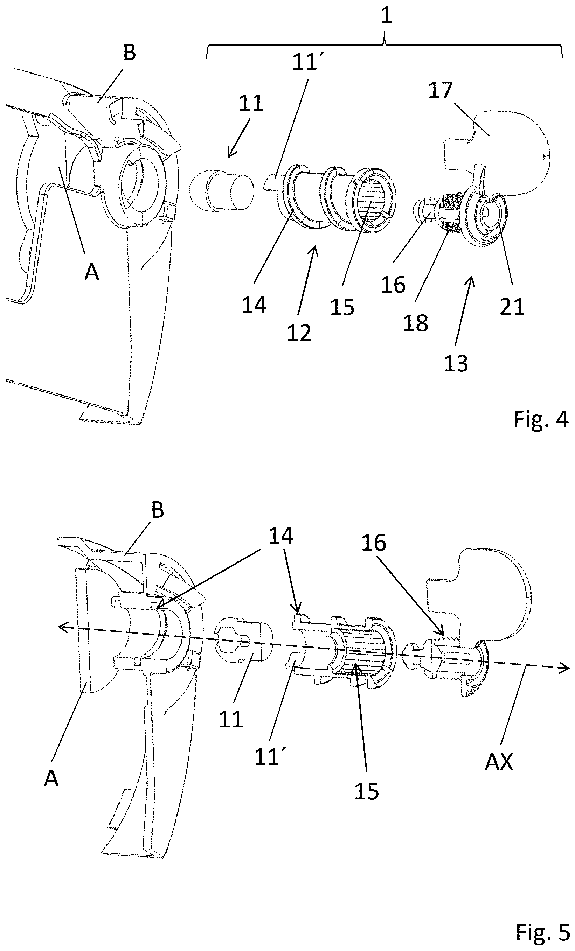

Figure 4 presents a perspective view of the components of the device 1.

The device 1 comprises a first part 12, and a second part 13, the first part 12 and the second part 13 being assembled together around an axis AX of the device 1, the device 1 being configured to be mounted on the second workpiece B, the device 1 being for example mobile in rotation around the axis AX of the device 1; for example the axis AX is transversal to the first main extension of the first workpiece A, and to the second main extension of the second workpiece B, for example mobile with respect to the second workpiece B and/or to the first workpiece A.

The first part 12 has a first end which may be provided, for example, with a first protruding element 11, made of an elastic material, such as rubber for example, so that the protruding element may act as a bumper for the first end of the first part 12. The first end of the first part 12 may also be provided with a second protruding element 11'.

The first part 12 of the device, is tubular around the axis AX of the device 1, with an outer surface provided, for example, with a thread 14 configured to interface with a complementary thread on the second workpiece B of the mechanical assembly, so that when the first part 12 of the device 1 is rotated in a first angular direction around the axis AX of the device 1, the first part 12 moves forth along the axis AX of the device 1, in the direction of the first end of the device 1, and towards the first workpiece A of the mechanical assembly, and when the first part 12 of the device 1 is rotated in a second angular direction around the axis AX of the device 1, the second angular direction being opposite to the first angular direction, the first part 12 moves along the axis AX of the device 1, backwards relative to the first workpiece A of the mechanical assembly.

In other words, the device 1 is mounted, by the first part 12 of the device 1, into a hole, for example a through hole, of the second workpiece B of the mechanical assembly, so that it is movable towards the first workpiece A, respectively away from the first workpiece A, along the axis AX of the device 1, which is for example, transverse to the main extension of the second workpiece B; the device 1 may be screwably mounted into the through hole of the second workpiece B so that when the first part 12 is rotated in the first angular direction, it moves forward towards the first workpiece A, and when the first part 12 is rotated in the second angular direction, it moves backwards away from the first workpiece A.

The second part 13 of the device 1 comprises a lever subpart 17 and a tubular subpart 16, an outer diameter DI of the tubular subpart 16 of the second part 13 being adjusted to an inner diameter Db of a hollow portion 15 of the first part 12, said hollow portion 15 being formed around the axis AX of the device 1, so that the tubular subpart 16 of the second part 13 of the device 1 is configured to be lodged, at least partially, inside the hollow portion 15 of the first part 12 of the device 1; an outer surface 18 of the tubular subpart 16 of the second part 13 is in frictional contact with an inner surface of the hollow portion 15 of the first part 12. The lever subpart 17 is fixed to the tubular subpart 16, so that tubular subpart 16 may be driven in rotation around the axis AX of the device 1 in the first angular direction, respectively in the second direction. The tubular subpart 16 may comprise an external portion 21 which remains outside the hollow portion 15 of the first part 12.

Furthermore, the frictional contact is created by a first profile of the inner surface of the hollow portion 15 of the first part 12 of the device 1 interacting with a second profile of the outer surface 18 of the tubular subpart 16 of the second part 13; the first profile and the second profile are such that when the tubular subpart 16 rotates in a first angular direction A1 around the axis AX of the device 1, while the first part 12 of the device 1 is maintained fixed, for example, by some external friction, then the outer surface 18 of the tubular subpart 16 slides relative to the inner surface of the hollow portion 15 of the first part 12; whereas when the tubular part 16 rotates in a second angular direction A2, opposite to the first angular direction A1, the frictional contact resistance is increased so that the rotation of the tubular subpart 16 in the second angular direction A2 may drive a rotation of the first part 12 in the second angular direction A2, provided said external friction is lower than the frictional contact resistance.

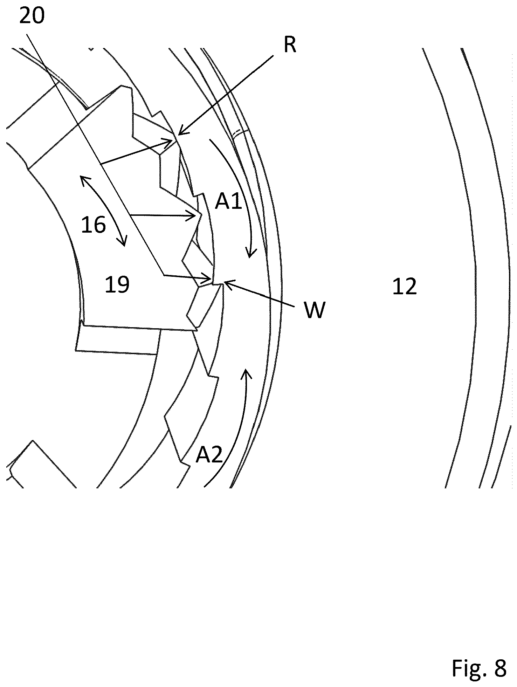

As represented in figure 8, in order to obtain the frictional contact resistance, the outer surface 18 of the tubular subpart 16 has, for example, knurled area placed on flexible sectors 19 with a plurality of contacts 20, which will slide on the inner surface of the hollow portion 15 of the first part 12, the inner surface having for example a grooved shape comprising an alternation of ramps R for better sliding of the plurality of contacts 20 in the first angular direction A1, and walls W, to increase the engagement of the plurality of contacts 20 in the second angular direction A2. The high quantity of contact, with different amount of interferences, avoids the "step-step" behaviour.

As indicated herein above, the device 1 is screwably mounted, by the first part 12 of the device 1, into a through hole of the second workpiece B of the mechanical assembly, so that it is moved forth towards the first workpiece A, respectively back from the first workpiece A, along the axis AX of the device 1, transverse to the main extension of the second workpiece B, when the first part 12 is rotated in the first angular direction, respectively in the second direction. An amplitude of the movement of the device 1 along the axis AX is proportional to an angle of rotation of the first part 12 of device 1. The amplitude of the movement forth may be such that the first part 12 of the device 1 is in contact with the first workpiece A of the mechanical assembly.

The tubular subpart 16, driven in rotation by the lever subpart 17, around the axis AX of the device 1, may drive in rotation the first portion in the first angular direction, respectively in the second direction, depending on the frictional contact created by the first profile of the inner surface of the hollow portion 15 of the first part 12 of the device 1 interacting with the second profile of the outer surface 18 of the tubular subpart 16 of the second part 13 of the device 1.

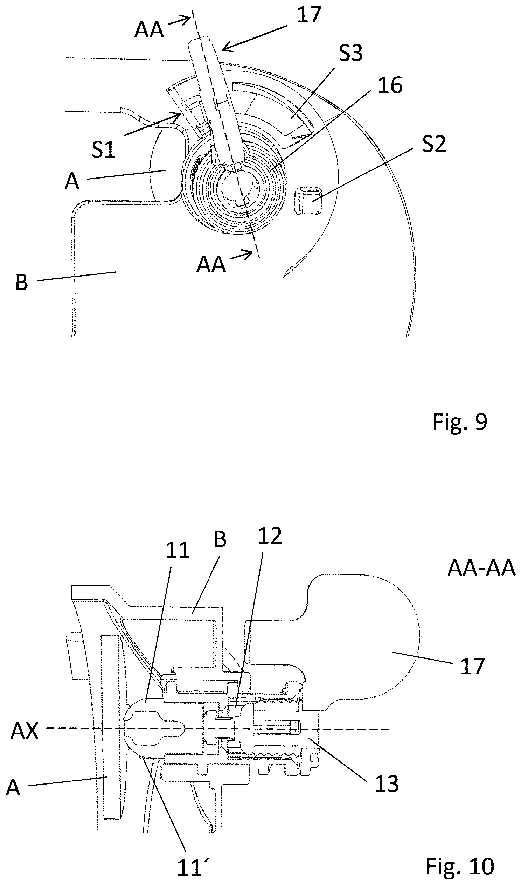

As represented in figure 9, the second workpiece B is provided with three stop position S1, S2, S3 for the lever subpart 17 of the second part 13 of the device 1.

A first stop position S1 refers to an initial angular position of the lever subpart 17, and consequently of the second part 13 of the device 1, as represented in figures 9 and 10, at a first step 101 of a tolerance compensation method 100 according to another aspect of the invention, which will be described in more detail herein below.

When the lever subpart 17 of the second part 13 of the device 1 is placed at the first stop position S1, the second protruding element 11' at the first end of the first part 12 of the device 1, is apart from the first workpiece A of the mechanical assembly by a first distance D1, as represented in figure 10. Due to the tolerances of the different manufacturing processes interfering in the mechanical assembly, the first distance D1 is not precisely known; as indicated in figure 10 it may be for example 3mm. Furthermore, the first protruding element 11 is not in contact with the first workpiece A of the mechanical assembly.

Therefore, in the configuration wherein the lever subpart 17 is at the first stop position S1, as represented in figures 9 and 10, the second part 12 of the device is subject to an external friction, essentially from the thread of the threaded through hole of the second workpiece B, such external friction being lower than the internal friction resulting from the frictional contact created by the first profile of the inner surface of the hollow portion 15 of the first part 12 of the device 1 interacting with the second profile of the outer surface 18 of the tubular subpart 16 of the second part 13.

At a next step 102 of the tolerance compensation method 100, the lever subpart 17 of the second part 13 of the device 1 is rotated in the first angular direction A1, so that the second part 13 drives in rotation the first part 12 of the device 1, provided the external friction remains lower than the internal friction.

As the first part 12 rotates, it moves, along the axis AX of the device, towards the first workpiece A of the mechanical assembly, up to a configuration wherein the first protruding element 11 at the first end of the first part 12 is in contact with the first workpiece A of the mechanical assembly, so that the external friction exerted on the first part 12 increases up to a point where it is higher than the internal friction. The first protruding element 11 is compressed so that the external friction exerted on the first part 12 becomes higher than the internal friction when the second protruding element 11' at the first end of the first part 12 is in contact with the first workpiece A of the mechanical assembly. In other words, and more appropriately described, the compressed first protruding element 11 is configured to exert a friction torque on the first part 12, said friction torque being greater than another opposing friction torque resulting from the frictional contact between the outer surface 18 of the tubular subpart 16 of the second part 13 and the inner surface of the hollow portion 15 of the first part 12, such that the second part 13 rotates with respect to the first part 12 in the first angular direction A1, while the first part 12 rotation is stopped.

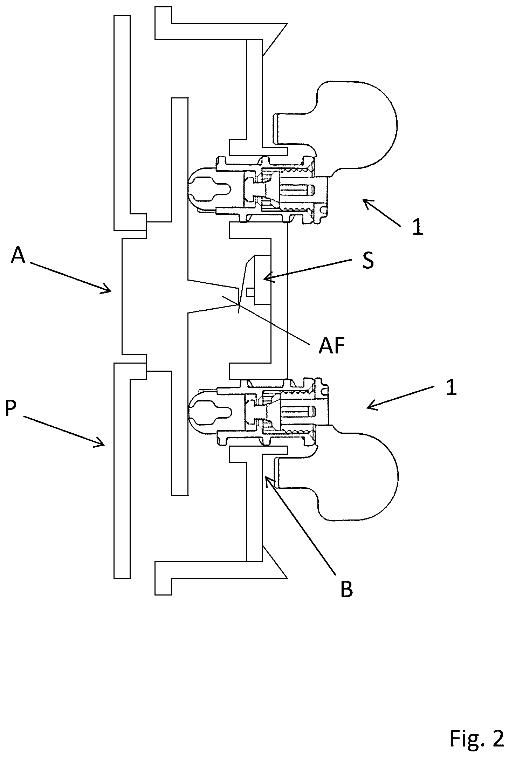

In this configuration, illustrated in figure 2, the position of the second protruding element 11' at the first end of the first part 12 of the device 1 is a reference position of the first workpiece A. The "reference position" is defined when the second protruding element 11, which for example includes or forms a rigid pin, of the part 12, as illustrated on figure 4, is in contact with the workpiece A. This results from example from the protruding element 11 being compressible enough to guarantee that the second protruding element 11', for example rigid pin, always touches the workpiece A at a certain point of the rotation. This results for example from the first protruding element 11 having a limited rigidity so as to allow contact between the second protruding element 11' and workpiece A.

The configuration of the device 1, according the first protruding element 11 is compressed so that the external friction exerted on the first part 12 becomes higher than the internal friction when the second protruding element 11' at the first end of the first part 12 is in contact with the first workpiece A of the mechanical assembly, is for example obtained by performing a tuning and/or adjustment method, which is for example a dimensioning method.

The method may include the tuning of the shoreness and/or compression ratio of the rubber material 11 and/or the shape of the knobs on the knurled surface, for example altogether, for example so as to achieve the sought frictions limits. For example, the shoreness and/or compression ratio of the protruding element 11, which is for example a rubber element, is tuned nad/or the shape of the knurled area, for example of the contacts 20 or knobs of the knurled surface are tuned, for example in combination.

The tuning method may include a first tuning step and/or a second tuning step. The first tuning step may be performed through computer means, for example through a processor, and for example include a finite elements analysis so as to provide tuned parameters, for example of the above-detailed parameters. The second tuning step is for example performed after the first tuning step. The second tuning step may include an experimental tuning, for example using prototype(s), so as to provide tuned parameters, for example of the above-detailed parameters.

From then on, as the lever subpart 17 continues to be rotated, driving in rotation the second part 13 of the device 1, the outer surface 18 of the tubular subpart 16 of the second part 13 now slides relative to the inner surface of the hollow portion 15 of the first part 12, so that the first part 12 is not driven any more in rotation.

Therefore, the configuration wherein the second protruding element 11' at the first end of the first part 12 is in contact with the first workpiece A of the mechanical assembly remains until the lever subpart 17 reaches the second stop position S2.

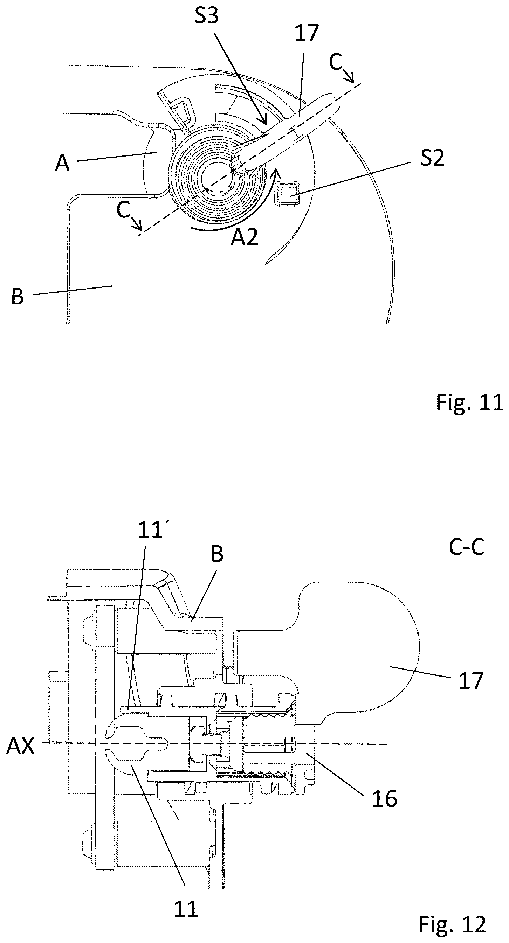

At a next step 103 of the tolerance compensation method 100, the lever subpart 17 of the second part 13 of the device 1 is rotated in the second angular direction A2 from the second stop position S2 to the third stop position S3, as represented in figure 11, the third stop position S3 being positioned between the stop position S1 and the stop position S2. While the lever subpart 17 of the second part 13 of the device 1 is rotated in the second angular direction A2, the frictional contact resistance created by the first profile of the inner surface of the hollow portion 15 of the first part 12 interacting with the second profile of the outer surface 18 of the tubular subpart 16 of the second part 13 is higher than the external friction exerted on the first part 12 by the thread of the threaded hole and by the action of the first protruding element 11, compressed by the first workpiece A of the mechanical assembly. Therefore, the second part 13 of the device 1 drives in rotation the first part 12 of the device, by an angle that is determined by the position of the third stop position S3 with respect with the position of the second stop position S2. The rotation of the first part 12 of the device 1 results in a backward movement of the device 1 along the axis AX of the device, creating a new distance D3, represented in figure 12, separating the first workpiece A of the mechanical assembly from the second protruding element 11' of the first part 12.The angle of rotation of the first part 12 from the second stop position S2 up to the third stop position S3 determines precisely the new distance, taking into account a pitch of the thread 14 of the second part 12; the new distance is known precisely, whereas at the first step of the method, the distance was unknown.

According to these provisions, the tolerances have been compensated in a final configuration of the mechanical assembly, wherein the distance between the device 1 on the second workpiece B and the first workpiece A is precisely known.

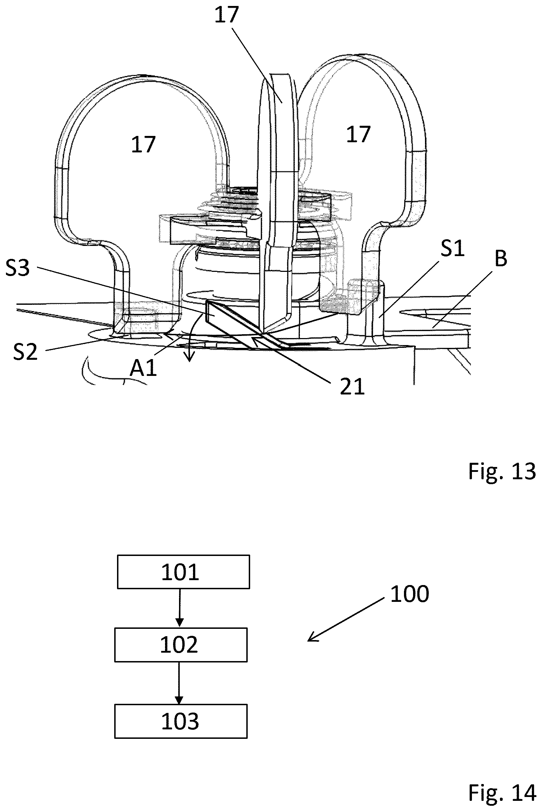

The third stop position S3 may be, for example, a clipping element fixed on the second workpiece B of the mechanical assembly; as represented in figure 13 such clipping element 21 is configured to let the lever subpart 17 pass over when it is rotated from the first stop position S1 up to the second stop position S2 in the first angular direction A1, and to stop the rotation of the lever subpart 17 when it is rotated oppositely from the second stop position S2 in the second angular direction A2.

## Claims

1. Device (1) for positioning of a first workpiece (A) at a predetermined distance from a second workpiece (B) in a mechanical assembly, the device (1) being configured to be mounted on the second workpiece (B) into a through hole of the second workpiece (B) of the mechanical assembly, the device (1) comprising a first part (12) and a second part (13), the first part (12) being tubular and having a hollow portion (15) formed around an axis (AX) of the device (1), the second part (13) comprising a tubular subpart (16) configured to be inserted, at least partially, inside the hollow portion (15) of the first part (12), an outer diameter (DI) of the tubular subpart (16) of the second part (13) being adjusted to an inner diameter (Db) of the hollow portion (15) of the first part (12) so that an outer surface (18) of the tubular subpart (16) of the second part (13) is in frictional contact with an inner surface of the hollow portion (15) of the first part (12), wherein a first angular position of the second part (13) around the axis (AX) of the device (1) is defined, so that a first rotation by a first angle of rotation of the second part (13) around the axis (AX) of the device (1) in a first angular direction (A1), from the first angular position drives a rotation, by the first angle of rotation, of the first part (12) around the axis (AX) in the first angular direction (A1) from the first angular position up to an intermediate angular position, the first rotation of the first part (12) around the axis (AX) simultaneously generating a movement of the first part (12) along the axis (AX) towards the first workpiece (A) such that an end of the device (1) is in contact with the first workpiece (A) of the mechanical assembly.

2. Device (1) according to claim 1, wherein a second angular position of the second part (13) around the axis (AX) of the device (1) is defined so that the intermediate angular position is between the first angular position and the second angular position, so that during a second rotation of the second part (13) around the axis (AX) of the device (1) in the first angular direction (A1), from the intermediate angular position to the second angular position, the first part (12) remains at the intermediate angular position.

3. Device (1) according to claim 1, wherein a third angular position of the second part (13) around the axis (AX) of the device (1) is defined inbetween the first angular position and the second angular position, so that a third rotation of the second part (13), by a third angle of rotation, around the axis (AX) of the device (1) in a second angular direction (A2) from the second angular position to the third angular position, drives a third rotation, by the third angle of rotation, of the first part (12) around the axis (AX) in the second angular direction (A2) and simultaneously generates a backward movement of the device (1) along the axis (AX) of the device (1), creating a predetermined distance (D3) separating the first workpiece (A) of the mechanical assembly from the end of the device (1).

4. Device (1) according to any of claims 1 to 3, wherein a first stop position (S1) is located on the second workpiece (B) of the mechanical assembly, the first stop position (S1) corresponding to the first angular position of the second part (13), and wherein a second stop position (S2) is located on the second workpiece (B) of the mechanical assembly, the second stop position (S2) corresponding to the second angular position of the second part (13), and wherein a third stop position (S3) is located on the second workpiece (B) of the mechanical assembly, the third stop position (S3) corresponding to the third angular position of the second part (13).

5. Device (1) according to any of claims 1 to 4, wherein the second part (13) comprises a lever subpart (17) integrally fixed with the tubular subpart (16) to actuate the rotation thereof.

6. Device (1) according to claim 5, depending from claim 4, wherein the lever subpart (17) is configured to come into contact with the first stop position when the second part is in the first angular position, and wherein the lever subpart (17) is configured to come into contact with the second stop position when the second part is in the second angular position, and wherein the lever subpart (17) is configured to come into contact with the third stop position when the second part is in the third angular position.

7. Device (1) according to anyof claims 1 to 6, wherein an outer surface (18) of the tubular subpart (16) of the second part (13) comprises at least one knurled area placed on sectors (19) with a plurality of contacts (20), configured to slide on an inner surface of the hollow portion (15) of the first part (12), said inner surface of the hollow portion (15) having a grooved shape comprising an alternation of ramps (R) such that the plurality of contacts (20) slide on the ramps when the second part (13) rotates with respect to the first part (12) in the first angular direction (A1), and walls (W) configured to engage at least one of the plurality of contacts (20) when the second part (13) rotates with respect to the first part (12) in the second angular direction (A2).

8. Device (1) according to any of claims 1 to 7, wherein the end of the first part (12) comprises at least one protruding element (11, 11').

9. Device (1) according to claim 8, wherein the at least one protruding element (11, 11') comprises a first protruding element (11), and a second protruding element (11').

10. Device (1) according to claim 9, wherein the first protruding element (11) is made of an elastic material, such as rubber.

11. Device(1) according to any of claims 9 or 10, wherein the first protruding element (11) is compressed when the second protruding element (11') is in contact with the first workpiece (A) of the mechanical assembly, the compressed first protruding element (11) being configured to exert a friction torque on the first part (12), said friction torque being greater than another opposing friction torque resulting from the frictional contact between the outer surface (18) of the tubular subpart (16) of the second part (13) and the inner surface of the hollow portion (15) of the first part (12), such that the second part (13) rotates with respect to the first part (12) in the first angular direction (A1), while the first part (12) rotation is stopped.

12. Assembly comprising the device (1) according to anyone of claims 1 to 11, the second workpiece (B), the device being mounted on the second workpiece (B) into the through hole of the second workpiece (B) of the assembly.

13. Assembly according to the preceding claim, further comprising the first workpiece (A).

14. Vehicle door comprising an assembly according to claim 13, wherein the assembly is a vehicle door opening assembly, the first workpiece (A) is an opening actuation member, located on an outer side of a door panel (P), the device (1), according to anyone of claims 1 to 10, being mounted on the second workpiece (B) of the door opening assembly.

15. Vehicle comprising a vehicle door according to claim 14.

16. Method (100) for positioning of a first workpiece (A) at a predetermined distance from a second workpiece (B) in a mechanical assembly, the method using a device (1) mounted on the second workpiece (B) into a through hole of the second workpiece (B) of the mechanical assembly, the device (1) comprising a first part (12) and a second part (13), the first part (12) being tubular and comprising a hollow portion (15) formed around an axis (AX) of the device (1), the second part (13) comprising a tubular subpart (16) configured to be inserted inside the hollow portion (15) of the first part (12), an outer diameter (DI) of the tubular subpart (16) of the second part (13) being adjusted to an inner diameter (Db) of the hollow portion (15) of the first part (12) so that an outer surface (18) of the tubular subpart (16) of the second part (13) is in frictional contact with an inner surface of the hollow portion (15) of the first part (12), wherein a first angular position of the second part (13) around the axis (AX) of the device (1) is defined, the method (100) comprising the following step (101) :
- apply a first rotation (101), by a first angle of rotation, to the second part (13) around the axis (AX) of the device (1) in a first angular direction (A1), from the first angular position driving a rotation, by the first angle of rotation, of the first part (12) around the axis (AX) in the first angular direction (A1) from the first angular position up to an intermediate angular position, the first rotation of the first part (12) around the axis (AX) simultaneously generating a movement of the first part (12) along the axis (AX) towards the first workpiece (A) such that an end of the first part (12) is in contact with the first workpiece (A) of the mechanical assembly.

## Patentansprüche

1. Vorrichtung (1) zum Positionieren eines ersten Werkstücks (A) in einem vorbestimmten Abstand zu einem zweiten Werkstück (B) in einer mechanischen Baugruppe, wobei die Vorrichtung (1) so eingerichtet ist, dass sie an dem zweiten Werkstück (B) in ein Durchgangsloch des zweiten Werkstücks (B) der mechanischen Baugruppe montiert wird, wobei die Vorrichtung (1) ein erstes Teil (12) und ein zweites Teil (13) umfasst, wobei das erste Teil (12) röhrenförmig ist und einen Hohlabschnitt (15) aufweist, der um eine Achse (AX) der Vorrichtung (1) gebildet ist, wobei das zweite Teil (13) ein röhrenförmiges Unterteil (16) umfasst, das so eingerichtet ist, dass es mindestens teilweise in den Hohlabschnitt (15) des ersten Teils (12) eingeführt wird, wobei ein Außendurchmesser (DI) des röhrenförmigen Unterteils (16) des zweiten Teils (13) auf einen Innendurchmesser (Db) des Hohlabschnitts (15) des ersten Teils (12) eingestellt ist, so dass eine Außenfläche (18) des röhrenförmigen Unterteils (16) des zweiten Teils (13) in Reibungskontakt mit einer Innenfläche des Hohlabschnitts (15) des ersten Teils (12) steht, wobei eine erste Winkelposition des zweiten Teils (13) um die Achse (AX) der Vorrichtung (1) definiert ist, so dass eine erste Drehung um einen ersten Drehwinkel des zweiten Teils (13) um die Achse (AX) der Vorrichtung (1) in einer ersten Winkelrichtung (A1), von der ersten Winkelposition aus, eine Drehung um den ersten Drehwinkel des ersten Teils (12) um die Achse (AX) in der ersten Winkelrichtung (A1) von der ersten Winkelposition bis zu einer mittleren Winkelposition antreibt, wobei die erste Drehung des ersten Teils (12) um die Achse (AX) gleichzeitig eine Bewegung des ersten Teils (12) entlang der Achse (AX) in Richtung des ersten Werkstücks (A) erzeugt, so dass ein Ende der Vorrichtung (1) in Kontakt mit dem ersten Werkstück (A) der mechanischen Baugruppe steht.

2. Vorrichtung (1) nach Anspruch 1, wobei eine zweite Winkelposition des zweiten Teils (13) um die Achse (AX) der Vorrichtung (1) definiert ist, so dass die Zwischenwinkelposition zwischen der ersten Winkelposition und der zweiten Winkelposition liegt, so dass während einer zweiten Drehung des zweiten Teils (13) um die Achse (AX) der Vorrichtung (1) in der ersten Winkelrichtung (A1), von der Zwischenwinkelposition zur zweiten Winkelposition, das erste Teil (12) in der Winkelzwischenposition verbleibt.

3. Vorrichtung (1) nach Anspruch 1, wobei eine dritte Winkelposition des zweiten Teils (13) um die Achse (AX) der Vorrichtung (1) zwischen der ersten Winkelposition und der zweiten Winkelposition definiert ist, so dass eine dritte Drehung des zweiten Teils (13) um einen dritten Drehwinkel, um die Achse (AX) der Vorrichtung (1) in einer zweiten Winkelrichtung (A2) von der zweiten Winkelposition zur dritten Winkelposition, eine dritte Drehung um den dritten Drehwinkel des ersten Teils (12) um die Achse (AX) in der zweiten Winkelrichtung (A2) antreibt und gleichzeitig eine Rückwärtsbewegung der Vorrichtung (1) entlang der Achse (AX) der Vorrichtung (1) erzeugt, wodurch ein vorbestimmter Abstand (D3) entsteht, der das erste Werkstück (A) der mechanischen Baugruppe vom Ende der Vorrichtung (1) trennt.

4. Vorrichtung (1) nach einem der Ansprüche 1 bis 3, wobei sich eine erste Anschlagposition (S1) am zweiten Werkstück (B) der mechanischen Baugruppe befindet, wobei die erste Anschlagposition (S1) der ersten Winkelposition des zweiten Teils (13) entspricht, und wobei sich eine zweite Anschlagposition (S2) am zweiten Werkstück (B) der mechanischen Baugruppe befindet, wobei die zweite Anschlagposition (S2) der zweiten Winkelposition des zweiten Teils (13) entspricht, und wobei eine dritte Anschlagposition (S3) sich auf dem zweiten Werkstück (B) der mechanischen Baugruppe befindet, wobei die dritte Anschlagposition (S3) der dritten Winkelposition des zweiten Teils (13) entspricht.

5. Vorrichtung (1) nach einem der Ansprüche 1 bis 4, wobei das zweite Teil (13) einen Hebelunterteil (17) umfasst, der integral mit dem röhrenförmigen Unterteil (16) befestigt ist, um dessen Drehung zu betätigen.

6. Vorrichtung (1) nach Anspruch 5, in Abhängigkeit von Anspruch 4, wobei das Hebelunterteil (17) so eingerichtet ist, dass es in Kontakt mit der ersten Anschlagposition kommt, wenn sich das zweite Teil in der ersten Winkelposition befindet, und wobei das Hebelunterteil (17) so eingerichtet ist, dass es in Kontakt mit der zweiten Anschlagposition kommt, wenn sich das zweite Teil in der zweiten Winkelposition befindet, und wobei das Hebelunterteil (17) so eingerichtet ist, dass es in Kontakt mit der dritten Anschlagposition kommt, wenn sich das zweite Teil in der dritten Winkelposition befindet.

7. Vorrichtung (1) nach einem der Ansprüche 1 bis 6, wobei eine Außenfläche (18) des röhrenförmigen Unterteils (16) des zweiten Teils (13) mindestens einen gerändelten Bereich umfasst, der auf Sektoren (19) mit einer Vielzahl von Kontakten (20) platziert ist, die so eingerichtet sind, dass sie auf einer Innenfläche des Hohlabschnitts (15) des ersten Teils (12) gleiten, wobei die Innenfläche des Hohlabschnitts (15) eine gerillte Form aufweist, die einen Wechsel von Rampen (R) umfasst, so dass die Vielzahl von Kontakten (20) auf den Rampen gleiten, wenn das zweite Teil (13) sich in Bezug auf das erste Teil (12) in der ersten Winkelrichtung (A1) dreht und Wände (W) so eingerichtet sind, dass sie mindestens in einen der Vielzahl der Kontakte (20) eingreifen, wenn sich das zweite Teil (13) in Bezug auf das erste Teil (12) in der zweiten Winkelrichtung (A2) dreht.

8. Vorrichtung (1) nach einem der Ansprüche 1 bis 7, wobei das Ende des ersten Teils (12) mindestens ein vorstehendes Element (11,11') umfasst.

9. Vorrichtung (1) nach Anspruch 8, wobei das mindestens eine vorstehende Element (11, 11') ein erstes vorstehendes Element (11) und ein zweites vorstehendes Element (11') umfasst.

10. Vorrichtung (1) nach Anspruch 9, wobei das erste vorstehende Element (11) aus einem elastischen Material, wie Gummi, besteht.

11. Vorrichtung (1) nach einem der Ansprüche 9 oder 10, wobei das erste vorstehende Element (11) zusammengedrückt wird, wenn das zweite vorstehende Element (11') in Kontakt mit dem ersten Werkstück (A) der mechanischen Baugruppe steht, wobei das zusammengedrückte erste vorstehende Element (11) so eingerichtet ist, dass es ein Reibmoment auf das erste Teil (12) ausübt, wobei das Reibmoment größer ist als ein anderes gegenläufiges Reibmoment, das sich aus dem Reibungskontakt zwischen der Außenfläche (18) des röhrenförmigen Unterteils (16) des zweiten Teils (13) und der Innenfläche des Hohlabschnitts (15) des ersten Teils (12) ergibt, so dass sich das zweite Teil (13) in Bezug auf das erste Teil (12) in der ersten Winkelrichtung (A1) dreht, während die Drehung des ersten Teils (12) gestoppt wird.

12. Baugruppe, umfassend die Vorrichtung (1) nach einem der Ansprüche 1 bis 11, das zweite Werkstück (B), wobei die Vorrichtung an dem zweiten Werkstück (B) in das Durchgangsloch des zweiten Werkstücks (B) der Baugruppe montiert ist.

13. Baugruppe nach dem vorhergehenden Anspruch, ferner umfassend das erste Werkstück (A).

14. Fahrzeugtür, umfassend eine Baugruppe nach Anspruch 13, wobei die Baugruppe eine Fahrzeugtüröffnungsbaugruppe ist, wobei das erste Werkstück (A) ein Öffnungsbetätigungselement ist, das sich an einer Außenseite eines Türflügels (P) befindet, wobei die Vorrichtung (1) nach einem der Ansprüche 1 bis 10 an dem zweiten Werkstück (B) der Türöffnungsbaugruppe montiert ist.

15. Fahrzeug, das eine Fahrzeugtür nach Anspruch 14 umfasst.

16. Verfahren (100) zum Positionieren eines ersten Werkstücks (A) in einem vorbestimmten Abstand zu einem zweiten Werkstück (B) in einer mechanischen Baugruppe, wobei das Verfahren eine Vorrichtung (1) verwendet, die an dem zweiten Werkstück (B) in ein Durchgangsloch des zweiten Werkstücks (B) der mechanischen Baugruppe montiert ist, wobei die Vorrichtung (1) ein erstes Teil (12) und ein zweites Teil (13) umfasst, wobei das erste Teil (12) röhrenförmig ist und einen um eine Achse (AX) der Vorrichtung (1) gebildeten Hohlabschnitt (15) umfasst, wobei das zweite Teil (13) ein röhrenförmiges Unterteil (16) umfasst, das so eingerichtet ist, dass es in den Hohlabschnitt (15) des ersten Teils (12) eingeführt werden kann, wobei ein Außendurchmesser (DI) des röhrenförmigen Unterteils (16) des zweiten Teils (13) auf einen Innendurchmesser (Db) des Hohlabschnitts (15) des ersten Teils (12) eingestellt ist, so dass eine Außenfläche (18) des röhrenförmigen Unterteils (16) des zweiten Teils (13) in Reibungskontakt mit einer Innenfläche des Hohlabschnitts (15) des ersten Teils (12) steht, wobei eine erste Winkelposition des zweiten Teils (13) um die Achse (AX) der Vorrichtung (1) definiert ist, wobei das Verfahren (100) den folgenden Schritt (101) umfasst:
- Anwenden einer ersten Drehung (101), um einen ersten Drehwinkel, auf das zweite Teil (13) um die Achse (AX) der Vorrichtung (1) in einer ersten Winkelrichtung (A1), von der ersten Winkelposition, die eine Drehung, um den ersten Drehwinkel, des ersten Teils (12) um die Achse (AX) in der ersten Winkelrichtung (A1) von der ersten Winkelposition bis zu einer mittleren Winkelposition antreibt, wobei die erste Drehung des ersten Teils (12) um die Achse (AX) gleichzeitig eine Bewegung des ersten Teils (12) entlang der Achse (AX) in Richtung des ersten Werkstücks (A) erzeigt, so dass ein Ende des ersten Teils (12) in Kontakt mit dem ersten Werkstück (A) der mechanischen Baugruppe steht.

## Revendications

1. Dispositif (1) pour le positionnement d'une première pièce (A) à une distance prédéterminée d'une seconde pièce (B) dans un ensemble mécanique, le dispositif (1) étant configuré pour être monté sur la seconde pièce (B) dans un trou traversant de la seconde pièce (B) de l'ensemble mécanique, le dispositif (1) comprenant une première partie (12) et une seconde partie (13), la première partie (12) étant tubulaire et ayant une partie creuse (15) formée autour d'un axe (AX) du dispositif (1), la seconde partie (13) comprenant une sous-partie tubulaire (16) configurée pour être insérée, au moins partiellement, à l'intérieur de la partie creuse (15) de la première partie (12), un diamètre externe (DI) de la sous-partie tubulaire (16) de la seconde partie (13) étant ajusté à un diamètre interne (Db) de la partie creuse (15) de la première partie (12) de sorte qu'une surface externe (18) de la sous-partie tubulaire (16) de la seconde partie (13) soit en contact par frottement avec une surface interne de la partie creuse (15) de la première partie (12), où une première position angulaire de la seconde partie (13) autour de l'axe (AX) du dispositif (1) est définie, de sorte qu'une première rotation d'un premier angle de rotation de la seconde partie (13) autour de l'axe (AX) du dispositif (1) dans une première direction angulaire (A1), depuis la première position angulaire, entraîne une rotation, du premier angle de rotation, de la première partie (12) autour de l'axe (AX) dans la première direction angulaire (A1) depuis la première position angulaire jusqu'à une position angulaire intermédiaire, la première rotation de la première partie (12) autour de l'axe (AX) générant simultanément un mouvement de la première partie (12) le long de l'axe (AX) vers la première pièce (A) de sorte qu'une extrémité du dispositif (1) soit en contact avec la première pièce (A) de l'ensemble mécanique.

2. . Dispositif (1) selon la revendication 1, dans lequel une deuxième position angulaire de la seconde partie (13) autour de l'axe (AX) du dispositif (1) est définie de sorte que la position angulaire intermédiaire se trouve entre la première position angulaire et la deuxième position angulaire, de sorte que, lors d'une deuxième rotation de la seconde partie (13) autour de l'axe (AX) du dispositif (1) dans la première direction angulaire (A1), de la position angulaire intermédiaire à la deuxième position angulaire, la première partie (12) reste à la position angulaire intermédiaire.

3. . Dispositif (1) selon la revendication 1, dans lequel une troisième position angulaire de la seconde partie (13) autour de l'axe (AX) du dispositif (1) est définie entre la première position angulaire et la deuxième position angulaire, de sorte qu'une troisième rotation de la seconde partie (13), d'un troisième angle de rotation, autour de l'axe (AX) du dispositif (1) dans une seconde direction angulaire (A2) de la deuxième position angulaire à la troisième position angulaire, entraîne une troisième rotation, du troisième angle de rotation, de la première partie (12) autour de l'axe (AX) dans la seconde direction angulaire (A2) et génère simultanément un mouvement en arrière du dispositif (1) le long de l'axe (AX) du dispositif (1), créant ainsi une distance prédéterminée (D3) séparant la première pièce (A) de l'ensemble mécanique de l'extrémité du dispositif (1).

4. . Dispositif (1) selon l'une des revendications 1 à 3, dans lequel une première position d'arrêt (S1) est située sur la seconde pièce (B) de l'ensemble mécanique, la première position d'arrêt (S1) correspondant à la première position angulaire de la seconde partie (13), et dans lequel une deuxième position d'arrêt (S2) est située sur la seconde pièce (B) de l'ensemble mécanique, la deuxième position d'arrêt (S2) correspondant à la deuxième position angulaire de la seconde partie (13), et dans lequel une troisième position d'arrêt (S3) est située sur la seconde pièce (B) de l'ensemble mécanique, la troisième position d'arrêt (S3) correspondant à la troisième position angulaire de la seconde partie (13).

5. . Dispositif (1) selon l'une des revendications 1 à 4, dans lequel la seconde partie (13) comprend une sous-partie de levier (17) fixée d'un seul tenant avec la sous-partie tubulaire (16) pour actionner sa rotation.

6. . Dispositif (1) selon la revendication 5, dépendant de la revendication 4, dans lequel la sous-partie de levier (17) est configurée pour venir en contact avec la première position d'arrêt lorsque la seconde partie se trouve dans la première position angulaire, et dans lequel la sous-partie de levier (17) est configurée pour venir en contact avec la deuxième position d'arrêt lorsque la seconde partie se trouve dans la deuxième position angulaire, et dans lequel la sous-partie de levier (17) est configurée pour venir en contact avec la troisième position d'arrêt lorsque la seconde partie se trouve dans la troisième position angulaire.

7. . Dispositif (1) selon l'une des revendications 1 à 6, dans lequel une surface externe (18) de la sous-partie tubulaire (16) de la seconde partie (13) comprend au moins une zone moletée placée sur des secteurs (19) ayant une pluralité de contacts (20), configurés pour coulisser sur une surface interne de la partie creuse (15) de la première partie (12), ladite surface interne de la partie creuse (15) ayant une forme rainurée comprenant une alternance de rampes (R) de sorte que la pluralité de contacts (20) coulisse sur les rampes lorsque la seconde partie (13) tourne par rapport à la première partie (12) dans la première direction angulaire (A1), et des parois (W) configurées pour s'engager avec au moins l'un de la pluralité de contacts (20) lorsque la seconde partie (13) tourne par rapport à la première partie (12) dans la seconde direction angulaire (A2).

8. . Dispositif (1) selon l'une des revendications 1 à 7, dans lequel l'extrémité de la première partie (12) comprend au moins un élément en saillie (11, 11').

9. . Dispositif (1) selon la revendication 8, dans lequel l'au moins un élément en saillie (11, 11') comprend un premier élément en saillie (11) et un second élément en saillie (11').

10. . Dispositif (1) selon la revendication 9, dans lequel le premier élément en saillie (11) est réalisé en un matériau élastique, tel que du caoutchouc.

11. . Dispositif (1) selon l'une des revendications 9 et 10, dans lequel le premier élément en saillie (11) est comprimé lorsque le second élément en saillie (11') est en contact avec la première pièce (A) de l'ensemble mécanique, le premier élément en saillie comprimé (11) étant configuré pour exercer un couple de frottement sur la première partie (12), ledit couple de frottement étant supérieur à un autre couple de frottement opposé résultant du contact par frottement entre la surface externe (18) de la sous-partie tubulaire (16) de la seconde partie (13) et la surface interne de la partie creuse (15) de la première partie (12), de sorte que la seconde partie (13) tourne par rapport à la première partie (12) dans la première direction angulaire (A1), tandis que la rotation de la première partie (12) est arrêtée.

12. . Ensemble comprenant le dispositif (1) selon l'une quelconque des revendications 1 à 11, la seconde pièce (B), le dispositif étant monté sur la seconde pièce (B) dans le trou traversant de la seconde pièce (B) de l'ensemble.

13. . Ensemble selon la revendication précédente, comprenant en outre la première pièce (A).

14. . Portière de véhicule comprenant un ensemble selon la revendication 13, dans laquelle l'ensemble est un ensemble d'ouverture de portière de véhicule, la première pièce (A) est un organe d'actionnement d'ouverture, situé sur un côté externe d'un panneau de portière (P), le dispositif (1), selon l'une quelconque des revendications 1 à 10, étant monté sur la seconde pièce (B) de l'ensemble d'ouverture de portière.

15. . Véhicule comprenant une portière de véhicule selon la revendication 14.

16. . Procédé (100) de positionnement d'une première pièce (A) à une distance prédéterminée d'une seconde pièce (B) dans un ensemble mécanique, le procédé utilisant un dispositif (1) monté sur la seconde pièce (B) dans un trou traversant de la seconde pièce (B) de l'ensemble mécanique, le dispositif (1) comprenant une première partie (12) et une seconde partie (13), la première partie (12) étant tubulaire et comprenant une partie creuse (15) formée autour d'un axe (AX) du dispositif (1), la seconde partie (13) comprenant une sous-partie tubulaire (16) configurée pour être insérée à l'intérieur de la partie creuse (15) de la première partie (12), un diamètre externe (DI) de la sous-partie tubulaire (16) de la seconde partie (13) étant ajusté à un diamètre interne (Db) de la partie creuse (15) de la première partie (12) de sorte qu'une surface externe (18) de la sous-partie tubulaire (16) de la seconde partie (13) soit en contact par frottement avec une surface interne de la partie creuse (15) de la première partie (12), où une première position angulaire de la seconde partie (13) autour de l'axe (AX) du dispositif (1) est définie, le procédé (100) comprenant l'étape suivante (101) :
- d'application d'une première rotation (101), d'un premier angle de rotation, à la seconde partie (13) autour de l'axe (AX) du dispositif (1) dans une première direction angulaire (A1), depuis la première position angulaire entraînant une rotation, du premier angle de rotation, de la première partie (12) autour de l'axe (AX) dans la première direction angulaire (A1) depuis la première position angulaire jusqu'à une position angulaire intermédiaire, la première rotation de la première partie (12) autour de l'axe (AX) générant simultanément un mouvement de la première partie (12) le long de l'axe (AX) vers la première pièce (A) de sorte qu'une extrémité de la première partie (12) soit en contact avec la première pièce (A) de l'ensemble mécanique.
